# EUROPEAN PATENT SPECIFICATION

(11) **EP 3 733 964 B1**
(45) Date of publication and mention of the grant of the patent: **08.10.2025**
(21) Application number: 19171640.6
(22) Date of filing: 29.04.2019
(51) Int. Cl.: D21F 5/18

(54) **PULP DRYER**
ZELLSTOFFTROCKNER
SÉCHOIR DE PÂTE

(43) Date of publication of application: 04.11.2020
(73) Proprietor: Valmet Technologies Oy, 02150 Espoo (FI)
(72) Inventor: Solin, Richard, 20100 Turku (FI)
(74) Representative: Berggren Oy

(56) References cited:
- EP-A1- 2 826 916
- WO-A1-02/063098
- WO-A1-02/50370
- WO-A1-2005/124017
- WO-A1-2008/059102

## Description

The present invention relates to a pulp dryer.

### BACKGROUND

Pulp is dried in a pulp dryer, where a pulp web is conveyed along a multi-layered path by floating it on an air cushion, which is formed by drying means comprising blow nozzles. The drying means are arranged in several superposed horizontal drying decks. The pulp web is typically brought into the pulp dryer through its first end, the so-called wet end. Then the pulp web is conveyed on the uppermost drying deck of the pulp dryer to the second end of the dryer. The ends of the dryer comprise turn rolls, which turn the pulp web to the following drying deck. After the final drying deck, the pulp web is brought to a cooling deck below the drying decks, and the pulp web is removed from the pulp dryer, typically from the second end of the pulp dryer. The pulp dryer typically has 10 - 30 drying decks. The gas blown from the drying means is typically hot air, having a temperature of 120 - 170 °C. When entering the pulp dryer, the pulp web typically has a dry solids content of 48 - 54 %. The dry solids content of the pulp web leaving the pulp dryer is typically 85 - 95 %, most commonly approximately 90 %.

The pulp dryer comprises usually several fans, which are used to remove humid air from the inside of the pulp dryer, and which also supply heated gas to the drying means. Several fans are usually arranged on top of each other to form so-called fan towers, and an appropriate number of fan towers are arranged adjacently at a distance from each other. Heating devices, such as heat exchangers or steam radiators, are arranged to heat the humid air before it is supplied as drying air to the drying means. Heating devices are arranged beside or in front of the suction openings of the fans, and the air is thus transferred to the fan through the heating device. In front of the heating devices, i.e. on their entry side, is usually arranged a filter net or the like to prevent dust and debris, such as shredded pulp, paper, fibres or the like, from entering into the heating device and further into the fan.

The pulp dryer has a theoretical evaporation capacity, which is determined in the design phase of the pulp dryer by using, inter alia, theoretical blow velocities of the drying means and blow temperatures. During the operation of the pulp dryer the evaporation capacity of the dryer decreases. One reason for the decreasing evaporation capacity is the collection of dust and other debris on the filter nets of the heating devices. This increases the pressure drop through the filter and reduces the volume and velocity of the air which is supplied to the drying means. A regular cleaning of the filter nets is performed in order to keep the filter nets clean and to reduce the decrease in evaporation capacity. However, no real-time information about the true instantaneous evaporation capacity is available, and the operators do not receive any reliable feedback about the effects of the performed cleaning operations. Consequently, there is a need for an arrangement that would provide real-time information about the changes in evaporation capacity and in blow conditions of the pulp dryer.

WO 02/063098 discloses a method for controlling drying of a web-formed material. The temperature of the process air is controlled. In the method if a deviation from the desired dry content of the dried web-formed material is detected, the volume flow of the process air is suitably changed for the purpose of rapidly regaining the desired dry content of the dried web-formed material.

Other methods and arrangements are disclosed in WO 2005/124017, WO 02/50370 and WO 2008/059102.

### SUMMARY OF THE INVENTION

One object of the present invention is to reduce or even completely eliminate the problems appearing in the prior art.

An object of the present invention is to provide a solution, with which the evaporation capacity of a pulp dryer can be monitored in real-time.

Another object of the present invention is to provide information about the need for and/or effects of the cleaning operations.

Yet another object of the present invention is to provide a method which offer new opportunities to improve and control the cleaning routines and improve productivity of a pulp dryer.

In order to realise the above-mentioned objects, the invention provides a pulp dryer according to claim 1.

### DETAILED DESCRIPTION OF THE INVENTION

A pulp dryer according to the present invention is defined in claim 1. The pulp dryer comprises
- an entrance opening for a pulp web in a first end of the pulp dryer and an exit opening for the pulp web in the second end of the pulp dryer,
- a number of horizontal superposed drying decks, whereby each drying deck comprises a number of drying groups, which comprise drying means for drying and supporting the pulp web to be dried,
- fan towers comprising a number of superposed fans, which are arranged to supply heated air to the drying groups,
- roll towers in the first and second ends of the pulp dryer, which comprise several superposed parallel turn rolls for turning the pulp web to from one drying deck to the succeeding drying deck,
   wherein the pulp dryer further comprises an arrangement which comprises
- at least one pressure sensor, which is arranged in a fixed position in connection with one of the drying means to measure pressure for the drying air inside the drying means,
- at least one temperature sensor, which is arranged in a fixed position in connection with one of the said fans supplying air to the drying means to provide temperature measurement values for the drying air which is supplied to the drying means,
- a control unit, which is arranged in functional contact with the said sensor(s) and to receive measurement values from the sensor(s), and which control unit comprises means for calculating an instantaneous blow velocity value with which the fan supplies the air into the drying means based on the measurement values.

A typical method for monitoring a pulp dryer comprises
- drying a pulp web in the pulp dryer by air blows from drying means,
- supplying heated drying air to the drying means by fans,
- measuring pressure values for the drying air inside at least one drying means, and optionally temperature values for the drying air which is supplied to the drying means at least one air blow,
- transmitting the measurement values to a control unit,
- calculating an instantaneous blow velocity value with which the fan supplies the air into the drying means based on the measurement values.

Now it has been surprisingly found out that by arranging at least one pressure sensor in a fixed position in connection with one of the drying means it is possible to obtain instantaneous and relevant information about the blow velocity values in the pulp dryer. The measured pressure values can be used to calculate an instantaneous blowing velocity values, which can be used to estimate, for example, the conditions of the filter nets, appropriate cleaning interval and/or effect of performed cleaning operations. Furthermore, at least one temperature sensor can be arranged in a fixed position in connection with one of the fans, supplying air to the drying means, which further improves the accuracy and versatility of the calculated values. The calculated blow velocity values can be used to further calculate an instantaneous evaporation capacity of the pulp dryer, which provides new possibilities to optimise the production capacity and/or production plans. The arrangement of the sensors in fixed positions make it possible to collect and store measurement values under prolonged time periods and under real process conditions, and to make comparations between the collected and stored measurement values and observed changes in dryer cleanliness and performance. This provides new improved ways to correlate the measurement values with real-life changes.

In the present context the term "in a fixed position" means that the sensor is permanently arranged to the pulp dryer. The sensor is typically fastened to the pulp dryer, that is fixedly mounted inside the drying means. The position of the sensor is stationary.

The arrangement may be arranged or incorporated in any pulp dryer, for example as described in the background part of this application. Typically, a pulp dryer comprises an entrance opening for a pulp web in a first end of the dryer and an exit opening for the pulp web in the second end of the dryer. The pulp dryer comprises a number of horizontal superposed drying decks and at least one cooling deck. The entrance opening is arranged on the level of the first drying deck and the exit opening is arranged on the level of the cooling deck below the drying decks. Roll towers are arranged in the first and second ends of the dryer and they comprise several superposed parallel turn rolls for turning the pulp web to from a drying deck to a succeeding drying deck. Each drying deck comprises a number of drying groups, which comprise a plurality of drying means for drying and supporting the pulp web to be dried. The drying means are usually elongated drying nozzle structures, which extend across the pulp web width. The blowing surface of the drying means comprises nozzle openings, nozzle slots or the like, through which drying air is lead towards the pulp web to be dried. The drying air functions at the same time also as a supporting medium for the web. The drying means has a first end, which comprises a supply air connection through which a fan supplies heated air into the drying means, and a second end. The height of the drying means typically decreases from the first end towards the second end of the drying means, i.e. the drying means is thereby wedge-shaped in its longitudinal direction. The pulp dryer further comprises fan towers, each of which comprises a number of superposed axial fans, which are arranged to supply heated air to the drying groups. One fan may supply heated air to one or several drying groups. The arrangement comprises at least one pressure sensor, which is arranged in a fixed position in connection with one of the drying means. This means that the pressure sensor is able to measure and provide information about the blow air pressure in real-time during the operation of the pulp dryer. The pressure measurement values are transmitted to a control unit, where they can be used to calculate the blow velocity value with which the fan supplies the air into the drying means. If a significant decrease in blow velocity values are observed, it may indicate that the filter net associated with the fan is blocked or becoming blocked. This information about the instantaneous blow velocity and/or its change as a function of time can be used to monitor and/or to adapt the cleaning routine of the filter nets. The blow velocity values may be further used in calculating the instantaneous evaporation capacity of the pulp dryer.

The pressure sensor is fixedly arranged in any suitable position within the drying means. The dynamic pressure usually decreases along the length of drying means. Therefore, the pressure sensor may preferably be fixedly arranged in the close vicinity of the closed second end of the drying means, opposite to the supply air connection. In this manner it is possible to obtain measurement values which with relative accuracy describe the pressure with which the fan supplies air to the drying means. Preferably the pressure sensor is arranged in connection with the drying means, which belongs to a lower drying group of a drying deck. Lower drying groups provide drying air towards the pulp web located above the drying group.

The arrangement may comprise 2 - 15, preferably 3 - 12, more preferably 3 - 10 pressure sensors, located at different parts or sections of the pulp dryer. Preferably the arrangement may comprise at least two pressure sensors, which are arranged at least in one of the fan towers, preferably both of the axial fan towers, which are located closest to the roll towers in the first and/or second end of the pulp dryer. According to one preferable embodiment the arrangement may comprise at least 5 pressure sensors, preferably located at different drying decks. Use of a plurality of pressure sensors enable creation of a more accurate understanding of the pulp dryer conditions, which may differ in different parts of the dryer. For example, the dusting problems are usually more pronounced in the upper part of the pulp dryer and decrease towards the lower part, as the pulp web becomes dry and hard during the drying, and less fibres loosen from the web. Furthermore, the dust laden air is removed from the upper part of the dryer. By carefully arranging the pressure sensors at the different heights of the pulp dryer, new insight in the pulp dryer conditions is available that can be used to adaptation of the cleaning routines and/or prediction of changes in evaporation capacity.

It is also possible to arrange at least two pressure sensors on the same drying deck. When at least two sensors are fixedly arranged on the same deck, any possible sensor errors can be effectively observed. On the same deck measurement values from the different sensors are generally close to each other. If a significant change in the measurement values is observed it may indicate a sensor error, or an unusual change in pulp dryer conditions.

The arrangement further comprises at least one temperature sensor which is arranged in fixed position in connection with one of the fans supplying air to the drying means. The temperature sensor provides temperature measurement values relating to the actual temperature of the drying air which is supplied to the drying means and used to dry the pulp web. The temperature measurement value can be used to calculate more accurate blow velocity values, as the temperature influences the pressure measurements, which in this way can be taken into account in a correct manner. The temperature measurement value provide also possibility to calculate the instantaneous evaporation capacity for the pulp dryer. Preferably the temperature sensor is located in a pressure chamber of the fan tower, close to the supply air connection of the drying means. Thus, the obtained temperature measurement values provide a good description of temperature of the air which is supplied by the fan. Especially when this temperature information is combined with the pressure information, completely new viewpoint to the conditions within the pulp dryer is provided.

The temperature sensor may be, for example, resistance temperature detector (RTD), platinum resistance thermometer (PRT), thermocouple or the like.

According to one embodiment of the invention the arrangement may comprise 2 - 15, preferably 3 - 12, more preferably 3 - 10, temperature sensors. Preferably the arrangement comprises an identical number of temperature and pressure sensors. The temperature and pressure sensors may preferably be arranged close to each other, in the same parts or sections of the pulp dryer. When the pressure and temperature sensors are arranged close to each other, they provide measurement values which are more closely related to each other and provide improved calculation results and estimates. According to one preferable embodiment the arrangement comprises at least one pressure sensor and the at least one temperature sensor, preferably arranged in connection with the same drying group. It is not necessary to arrange the pressure sensor in the same drying means, i.e. the same drying nozzle, but preferably the pressure sensor is arranged within the drying means, preferably in the closed second end of the drying means, and the temperature sensor is arranged in connection with the fan supplying the said drying means.

According to one preferable embodiment the pressure sensor and the temperature sensor are arranged in connection with the same drying means. The temperature sensor may be fixedly arranged in connection with the first end of the drying means, for example in the pressure chamber of the fan, in immediate vicinity of the supply air connection of the drying means, and the pressure sensor may be fixedly arranged in connection with the second end of the same drying means.

The arrangement may preferably comprise at least two pressure sensors and/or at least two temperature sensors, which are fixedly arranged at different drying decks. This provides relevant information from different sections of the pulp dryer and may help to locate sections where cleaning of the filter nets is required. The location of the sensors may be selected so that they are arranged in dryer parts or sections where traditionally problems have occurred. According to one embodiment at least two pressure sensors and/or temperature sensors are arranged in the vicinity of one fan tower but at the different drying decks. According to another embodiment at least one pressure sensor and/or at least one temperature sensor are arranged in connection with 1 - 5 drying decks, seen from the entrance opening level. Especially the arrangement may comprise at least one pressure sensor, and optionally at least one temperature sensor, which may be arranged in vicinity of the entrance opening and/or cooling deck and/or the exit opening of the pulp dryer. Preferably one pressure sensor is arranged in the vicinity of the entrance opening and one pressure sensor is arranged in the vicinity of the exit opening or the cooling deck.

The arrangement comprises also a control unit, which is arranged in functional contact with the pressure sensor and the optional temperature sensor. The control unit is arranged or configured to receive measurement values from the sensor(s). The control unit may be arranged in wired connection with the pressure sensor(s) and optional temperature sensor(s). Alternatively, at least some of the sensors may be arranged in wireless connection with the control unit. According to one preferable embodiment the pressure sensors and/or optional temperature sensors are arranged in wireless connection with the control unit. In case the pressure sensor(s) and optional temperature sensor(s) are arranged in a wireless connection with the control unit, the sensors comprise transmitting means, which transmits the measurement values from the sensor to the control unit.

The control unit may be, for example, a separate or inseparable part of the control and monitor system of the pulp dryer.

According to one embodiment pressure and temperature measurement values are measured, and an instantaneous evaporation capacity value for the pulp dryer is calculated. The control unit may comprise mathematical means for calculating an instantaneous blow velocity value based on the measurement values received from the pressure sensor(s) and/or optional temperature sensors. The control unit may further comprise mathematical means for calculating an instantaneous evaporation capacity of the pulp dryer based on the pressure and optional temperature measurement values. On-line calculation of the instantaneous blow velocity and evaporation capacity values provide, inter alia, a new problem solving and production planning tool which enables new possibilities for production optimization. The control unit may further comprise means which provide an alert when the blow velocity and/or evaporation capacity value falls below a predetermined limit value. The alert guides the operators to start the cleaning routine and/or to target the cleaning routine to certain specified sections of the pulp dryer.

The control unit may comprise a memory unit for storing the measured measurement values, calculated blow velocity values and/or drying capacity values. Various mathematical functions, as well as known calculation constants and reference values may also be stored in the memory unit.

The control unit may further comprise mathematical prediction means for calculation an evaporation capacity prediction. The prediction means may use the measurement values as well as calculated values stored in the memory unit, and various mathematical and statistical functions and/or models for calculation the evaporation capacity prediction. According to one preferable embodiment the measurement values and the calculated blow velocity values and/or evaporation capacity values are stored in the memory unit of a control unit, and a prediction for the drying capacity value is calculated based on the stored values.

Furthermore, the control unit may comprise transmission means for transmitting the measured and/or calculated values to a central control system of the pulp mill. The control unit may form a part of the central control system of the pulp mill. Alternatively, or in addition, the control unit may transmit the measured and/or calculated values to an external control system, remotedly located e.g. at outside service provider. In this manner the service provider may suggest time schedule for future service operations and the operations may be accurately timed.

The arrangement may further comprise any additional sensors that provide relevant information about the conditions of the pulp dryer. The measurement values from the additional sensors may be used to fine-tune the calculated blow velocity and/or evaporation capacity values and/or evaporation capacity prediction. The arrangement may, for example, comprise one or more steam pressure sensors, which measure the pressure of the steam which is used in the heating devices. The arrangement may comprise also an additional temperature measuring device for measuring the temperature and/or moisture of the web before the entrance opening of the dryer. The temperature measuring device may be, for example, an IR sensor.

### DESCRIPTION OF THE FIGURES

Some embodiments of the invention are more closely described in the schematical non-limiting drawings, where
Figure 1 shows schematically a side view of a pulp dryer according to one embodiment of the invention, and
Figure 2 shows schematically a longitudinal side view of two drying groups and an arrangement according to another embodiment of the invention.

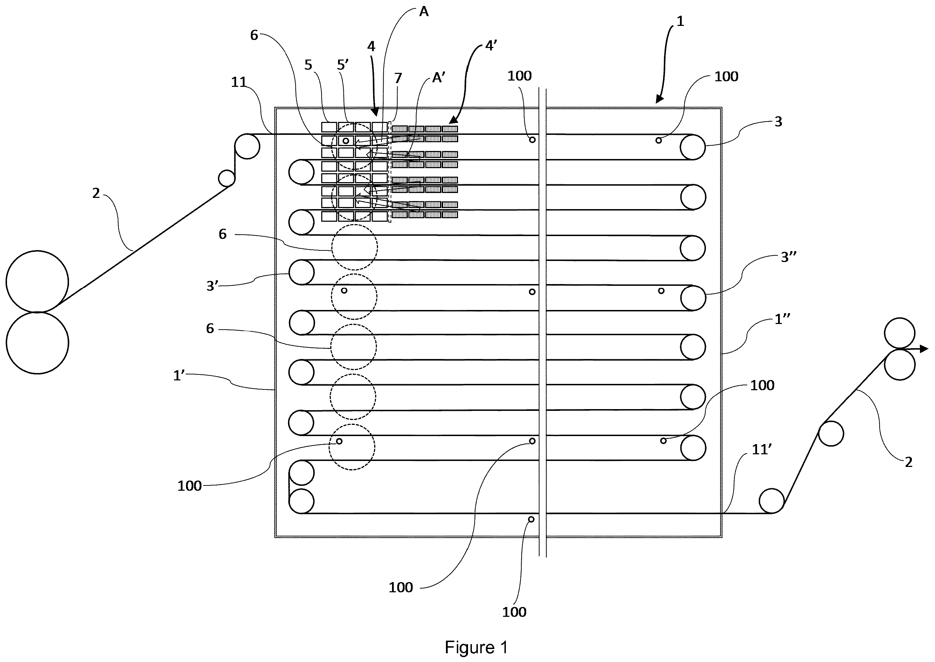

Figure 1 shows schematically a side view of a pulp dryer according to one embodiment of the invention. The pulp dryer 1 comprises an entrance opening 11 and an exit opening 11' for a pulp web 2. The pulp dryer 1 comprises a number of horizontal superposed drying decks, as well as turn rolls 3, 3', 3", which turn the pulp web 2 from a first drying deck to a succeeding drying deck.

Each drying deck comprises a number of drying groups 4, which comprise a plurality of drying means 5, 5'. For the sake of clarity, only a number of drying groups and drying means are depicted in the upper left corner of the pulp dryer 1 in Figure 1. However, it is understood that the whole interior of the pulp dryer 1 is filled in the with drying means arranged in drying groups on both sides of the pulp web 1 as it travels through the pulp dryer 1.

Fans 6 supply heated air to the drying groups 4. Only one tower of fans 6 is shown, but it is understood that the pulp dryer comprises a plurality of such towers, arranged on both sides of the pulp dryer. It is seen that air flows, illustrated with arrows A, A', to the fans 6 are directed through filter net 7, which removes the debris and dust from the air flow A, A' before it enters the fan. The air flows A, A' originate from the area around the second end of the drying means of the neighbouring dryer group 4', which have their fan (not shown) on the other side of the pulp dryer 1, in the other end of the drying group 4'.

The pulp dryer 1 comprises an arrangement of a number of pressure sensors 100. The pressure sensors are arranged in the vicinity of the first end 1' and the second end 1"of the pulp dryer 1, and some pressure sensors are also arranged to the middle part of the pulp dryer 1. Furthermore, the pressure sensors 100 are arranged in the drying means of the drying groups that are located below the pulp web 2. The blow velocity and volume decrease in the drying groups below the web is especially harmful, as it may lead inadequate support and contact between the web and the surface of the drying means. Such contact increases the loosening of dust and fibres from the web and worsens the loss of the evaporation capacity.

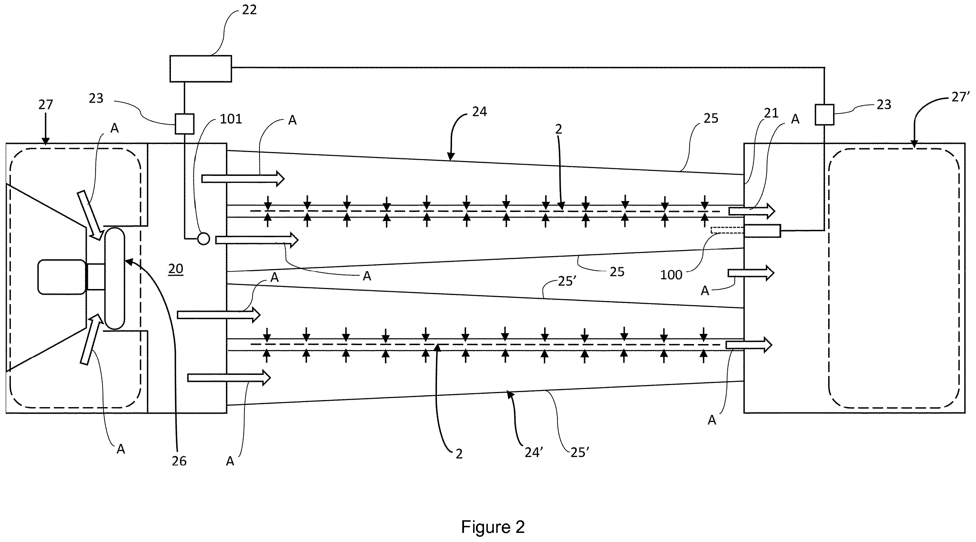

Figure 2 shows schematically a longitudinal side view of two drying groups and an arrangement according to another embodiment of the invention. Air flows are indicated with arrows A in Figure 2. A fan 26 supplies air to two drying groups 24, 24', which comprise drying means 25, 25'. The direction of the movement of the pulp web 2 is out of the figure towards the viewer. The air blows drying and supporting the pulp web are schematically depicted with small black arrows. The broken line rectangles 27, 27' in Figure 2 show the conceptual locations of the heating means at one fan 26, even if in reality the heating means extend on the area of 2 - 3 fans. The air flows around the drying groups 24, 24' and their drying means 25, 25' through a filter net (not shown) and the heating means 27' to an another fan (not shown).

A temperature sensor 101 is fixedly arranged in the supply chamber 20 of the fan 26 in the close vicinity of the supply air connection to the drying means 25. In this manner an accurate temperature measurement value for the air to be supplied can be obtained. A pressure sensor 100 is fixedly arranged in the closed second end 21 of the drying means 25. The pressure sensor 100 measures the pressure measurement value for the drying air inside the drying means 25. Due to the location of the pressure sensor 100 the pressure measurement can be performed in a relatively static environment, as no air flow out of the second end of the drying means exists.

The fixed temperature sensor 101 and the fixed pressure sensor 100 are arranged in functional contact with a control unit 22 which comprises calculation means calculating an instantaneous blow velocity value based on the measurement values. The arrangement comprises transmitters 23 arranged in wireless or wired contact with both the sensors 100, 101 and the control unit 22 for transmitting measurement values from the sensors 100, 101 to the control unit 22.

Even if the invention was described with reference to what at present seems to be the most practical and preferred embodiments, it is appreciated that the invention shall not be limited to the embodiments described above, but the invention is defined in the claims.

## Claims

1. A pulp dryer, which pulp dryer (1) comprises
- an entrance opening (11) for a pulp web (2) in a first end (1') of the dryer (1) and an exit opening (11') for the pulp web (2) in the second end (1") of the dryer (1),
- a number of horizontal superposed drying decks, whereby each drying deck comprises a number of drying groups (4, 4', 24, 24'), which comprise drying means (5, 5', 25, 25') for drying and supporting a pulp web (2) to be dried,
- fan towers comprising a number of superposed fans (6, 26), which are arranged to supply heated drying air to the drying groups (4, 4', 24, 24'),
- roll towers in the first and second ends (1', 1") of the pulp dryer (1), which comprise several superposed parallel turn rolls (3, 3', 3") for turning the pulp web (2) to from one drying deck to the succeeding drying deck,
**characterised in that**
the pulp dryer (1) further comprises an arrangement, which comprises
- at least one pressure sensor (100), which is arranged in a fixed position in connection with one of the drying means (5, 5', 25, 25') to measure pressure for the drying air inside the drying means (5, 5', 25, 25'),
- at least one temperature sensor (101), which is arranged in a fixed position in connection with one of the fans (6, 26) supplying air to the drying means (5, 5', 25, 25') to provide temperature measurement values for the drying air which is supplied to the drying means (5, 5', 25, 25'),
- a control unit (22), which is arranged in functional contact with the said sensors and to receive measurement values from the sensors, and which control unit comprises means for calculating an instantaneous blow velocity value with which the fan (6, 26) supplies the air into the drying means (5, 5', 25, 25') based on the measurement values.

2. Pulp dryer (1) according to claim 1, **characterised in that** the said sensor(s) is/are arranged in a wireless connection with the control unit (22).

3. Pulp dryer (1) according to claim 1 or 2, **characterised in that** that the arrangement comprises at least one pressure sensor (100) and at least one temperature sensor (101), and that the control unit (22) further comprises mathematical means for calculating an instantaneous evaporation capacity of the pulp dryer (1) based on the measurement values.

4. Pulp dryer (1) according to claim 1, 2 or 3, **characterised in that** the arrangement comprises the at least one pressure sensor (100) and the at least one temperature sensor (101), which are arranged in connection of the same drying group (4, 4', 24, 24').

5. Pulp dryer (1) according to any of preceding claims 1 - 4, **characterised in that** the arrangement comprises 2 - 15, preferably 3 - 12, more preferably 3 - 10 pressure sensors (100) and/or 2 - 15, preferably 3 - 12, more preferably 3 - 10 temperature sensors (101).

6. Pulp dryer (1) according to any of preceding claims 1 - 5, **characterised in that** the arrangement comprises at least two pressure sensors (100) and/or at least two temperature sensors (101) arranged at different drying decks.

7. Pulp dryer (1) according to any of preceding claims 1 - 6, **characterised in that** the at least one pressure sensor (100), and optionally the at least one temperature sensor (101), is arranged in vicinity of the entrance opening (11) and/or the exit opening (11').

8. Pulp dryer (1) according to any of preceding claims 1 - 7, **characterised in that** the arrangement comprises at least two pressure sensors (100) arranged at least in one of the fan towers, which are located closest to the roll towers.

9. Pulp dryer (1) according to any of preceding claims 1 - 8, **characterised in that** the arrangement comprises an additional temperature device for measuring the temperature of the web before the entrance opening (11) of the dryer (1).

10. Pulp dryer (1) according to any of preceding claims 1 - 9, **characterised in that** the at least one pressure sensor (100) and/or the at least one temperature sensor (101) are arranged in connection with 1 - 5 drying decks, seen from the entrance opening (11).

11. Pulp dryer (1) according to any of preceding claims 1 - 10, **characterised in that** the control unit (22) comprises a memory unit for storing the measured measurement values, calculated blow velocity values and/or calculated evaporation capacity values.

12. Pulp dryer (1) according to claim 11, **characterised in that** the control unit (22) comprises mathematical prediction means for calculation a drying capacity prediction.

## Patentansprüche

1. Zellstofftrockner, wobei der Zellstofftrockner (1) Folgendes umfasst:
- eine Eintrittsöffnung (11) für eine Zellstoffbahn (2) in einem ersten Ende (1') des Trockners (1) und eine Austrittsöffnung (11') für die Zellstoffbahn (2) in dem zweiten Ende (1") des Trockners (1),
- eine Anzahl von horizontal übereinander angeordneten Trocknungsdecks, wobei jedes Trocknungsdeck eine Anzahl von Trocknungsgruppen (4, 4', 24, 24') umfasst, die Trocknungsmittel (5, 5', 25, 25') zum Trocknen und Stützen einer zu trocknenden Zellstoffbahn (2) umfassen,
- Lüftertürme, umfassend eine Anzahl von übereinander angeordneten Lüftern (6, 26), die angeordnet sind, um erwärmte Trocknungsluft zu den Trocknungsgruppen (4, 4', 24, 24') zu liefern,
- Walzentürme am ersten und zweiten Ende (1', 1") des Zellstofftrockners (1), die mehrere übereinander angeordnete parallele Wendewalzen (3, 3', 3") zum Wenden der Zellstoffbahn (2) von einem Trockendeck zum nachfolgenden Trockendeck umfassen,
**dadurch gekennzeichnet, dass**
der Zellstofftrockner (1) ferner eine Anordnung umfasst, die Folgendes umfasst:
- mindestens einen Drucksensor (100), der ortsfest in Verbindung mit einem der Trocknungsmittel (5, 5', 25, 25') angeordnet ist, um den Druck der Trocknungsluft innerhalb der Trocknungsmittel (5, 5', 25, 25') zu messen,
- mindestens einen Temperatursensor (101), der in Verbindung mit einem der die Trocknungsmittel (5, 5', 25, 25') mit Luft versorgenden Lüfter (6, 26) ortsfest angeordnet ist, um Temperaturmesswerte für die den Trocknungsmitteln (5, 5', 25, 25') zugeführte Trocknungsluft bereitzustellen,
- eine Steuereinheit (22), die in funktionellem Kontakt mit den Sensoren angeordnet ist, um Messwerte von den Sensoren zu empfangen, und die Mittel zur Berechnung eines momentanen Wertes der Blasgeschwindigkeit umfasst, mit der der Lüfter (6, 26) die Luft in die Trocknungsmittel (5, 5', 25, 25') auf der Basis der Messwerte zuführt.

2. Zellstofftrockner (1) nach Anspruch 1, **dadurch gekennzeichnet, dass** der/die Sensor(en) in einer drahtlosen Verbindung mit der Steuereinheit (22) angeordnet ist/sind.

3. Zellstofftrockner (1) nach Anspruch 1 oder 2, **dadurch gekennzeichnet, dass** die Anordnung mindestens einen Drucksensor (100) und mindestens einen Temperatursensor (101) umfasst, und dass die Steuereinheit (22) ferner mathematische Mittel zur Berechnung einer momentanen Verdampfungsleistung des Zellstofftrockners (1) basierend auf den Messwerten umfasst.

4. Zellstofftrockner (1) nach Anspruch 1, 2 oder 3, **dadurch gekennzeichnet, dass** die Anordnung mindestens einen Drucksensor (100) und mindestens einen Temperatursensor (101) umfasst, die in Verbindung mit der gleichen Trocknungsgruppe (4, 4', 24, 24') angeordnet sind.

5. Zellstofftrockner (1) nach einem der vorstehenden Ansprüche 1 bis 4, **dadurch gekennzeichnet, dass** die Anordnung 2 bis 15, vorzugsweise 3 bis 12, besonders bevorzugt 3 bis 10 Drucksensoren (100) und/oder 2 bis 15, vorzugsweise 3 bis 12, besonders bevorzugt 3 bis 10 Temperatursensoren (101) umfasst.

6. Zellstofftrockner (1) nach einem der vorstehenden Ansprüche 1 bis 5, **dadurch gekennzeichnet, dass** die Anordnung mindestens zwei Drucksensoren (100) und/oder mindestens zwei Temperatursensoren (101) umfasst, die an unterschiedlichen Trocknungsdecks angeordnet sind.

7. Zellstofftrockner (1) nach einem der vorstehenden Ansprüche 1 bis 6, **dadurch gekennzeichnet, dass** der mindestens eine Drucksensor (100), optional der mindestens eine Temperatursensor (101), in der Nähe der Eintrittsöffnung (11) und/oder der Austrittsöffnung (11') angeordnet ist.

8. Zellstofftrockner (1) nach einem der vorstehenden Ansprüche 1 bis 7, **dadurch gekennzeichnet, dass** die Anordnung mindestens zwei Drucksensoren (100) umfasst, die mindestens in einem der Lüftertürme angeordnet sind, die sich am nächsten zu den Walzentürmen befinden.

9. Zellstofftrockner (1) nach einem der vorstehenden Ansprüche 1 bis 8, **dadurch gekennzeichnet, dass** die Anordnung eine zusätzliche Temperaturvorrichtung zur Messung der Temperatur der Bahn vor der Eintrittsöffnung (11) des Trockners (1) umfasst.

10. Zellstofftrockner (1) nach einem der vorstehenden Ansprüche 1 bis 9, **dadurch gekennzeichnet, dass** der mindestens eine Drucksensor (100) und/oder der mindestens eine Temperatursensor (101) in Verbindung mit 1 bis 5 Trocknungsdecks, gesehen von der Eintrittsöffnung (11), angeordnet sind.

11. Zellstofftrockner (1) nach einem der vorstehenden Ansprüche 1 bis 10, **dadurch gekennzeichnet, dass** die Steuereinheit (22) eine Speichereinheit zum Speichern der gemessenen Messwerte, der berechneten Blasgeschwindigkeitswerte und/oder der berechneten Verdampfungsleistungswerte umfasst.

12. Zellstofftrockner (1) nach Anspruch 11, **dadurch gekennzeichnet, dass** die Steuereinheit (22) mathematische Prognosemittel zur Berechnung einer Trocknungskapazitätsprognose umfasst.

## Revendications

1. Séchoir de pâte, lequel séchoir de pâte (1) comprend
- une ouverture d'entrée (11) pour une bande de pâte (2) dans une première extrémité (1') du séchoir (1) et une ouverture de sortie (11') pour la bande de pâte (2) dans la seconde extrémité (1") du séchoir (1),
- un certain nombre d'étages de séchage horizontaux superposés, moyennant quoi chaque étage de séchage comprend un certain nombre de groupes de séchage (4, 4', 24, 24'), qui comprennent des moyens de séchage (5, 5', 25, 25') pour sécher et supporter une bande de pâte (2) à sécher,
- des tours de ventilation comprenant un certain nombre de ventilateurs superposés (6, 26), qui sont disposés pour fournir de l'air de séchage chauffé aux groupes de séchage (4, 4', 24, 24'),
- des tours à rouleaux dans les première et seconde extrémités (1', 1") du séchoir de pâte (1), qui comprennent plusieurs rouleaux rotatifs parallèles superposés (3, 3', 3") pour faire tourner la bande de pâte (2) d'un étage de séchage à l'étage de séchage suivant,
**caractérisé en ce que**
le séchoir de pâte (1) comprend également une disposition, qui comprend
- au moins un capteur de pression (100), qui est disposé dans une position fixe en liaison avec l'un des moyens de séchage (5, 5', 25, 25') pour mesurer la pression de l'air de séchage à l'intérieur des moyens de séchage (5, 5', 25, 25'),
- au moins un capteur de température (101), qui est disposé dans une position fixe en liaison avec l'un des ventilateurs (6, 26) fournissant de l'air aux moyens de séchage (5, 5', 25, 25') pour fournir des valeurs de mesure de température pour l'air de séchage qui est fourni aux moyens de séchage (5, 5', 25, 25'),
- une unité de commande (22), qui est disposée en contact fonctionnel avec lesdits capteurs et pour recevoir des valeurs de mesure des capteurs, et laquelle unité de commande comprend des moyens pour calculer une valeur de vitesse de soufflage instantanée avec laquelle le ventilateur (6, 26) fournit l'air dans les moyens de séchage (5, 5', 25, 25') sur la base des valeurs de mesure.

2. Séchoir de pâte (1) selon la revendication 1, **caractérisé en ce que** le(s)dit(s) capteur(s) est/sont disposé(s) en liaison sans fil avec l'unité de commande (22).

3. Séchoir de pâte (1) selon la revendication 1 ou 2, **caractérisé en ce que** la disposition comprend au moins un capteur de pression (100) et au moins un capteur de température (101), et **en ce que** l'unité de commande (22) comprend également des moyens mathématiques pour calculer une capacité d'évaporation instantanée du séchoir de pâte (1) sur la base des valeurs de mesure.

4. Séchoir de pâte (1) selon la revendication 1, 2 ou 3, **caractérisé en ce que** la disposition comprend l'au moins un capteur de pression (100) et l'au moins un capteur de température (101), qui sont disposés en liaison avec le même groupe de séchage (4, 4', 24, 24').

5. Séchoir de pâte (1) selon l'une quelconque des revendications précédentes 1 à 4, **caractérisé en ce que** la disposition comprend 2 à 15, de préférence 3 à 12, plus préférablement 3 à 10 capteurs de pression (100) et/ou 2 à 15, de préférence 3 à 12, plus préférablement 3 à 10 capteurs de température (101).

6. Séchoir de pâte (1) selon l'une quelconque des revendications précédentes 1 à 5, **caractérisé en ce que** la disposition comprend au moins deux capteurs de pression (100) et/ou au moins deux capteurs de température (101) disposés sur différents étages de séchage.

7. Séchoir de pâte (1) selon l'une quelconque des revendications précédentes 1 à 6, **caractérisé en ce que** l'au moins un capteur de pression (100), et éventuellement
l'au moins un capteur de température (101), est disposé à proximité de l'ouverture d'entrée (11) et/ou de l'ouverture de sortie (11').

8. Séchoir de pâte (1) selon l'une quelconque des revendications précédentes 1 à 7, **caractérisé en ce que** la disposition comprend au moins deux capteurs de pression (100) disposés au moins dans l'une des tours de ventilation, qui sont situées le plus près des tours à rouleaux.

9. Séchoir de pâte (1) selon l'une quelconque des revendications précédentes 1 à 8, **caractérisé en ce que** la disposition comprend un dispositif de température supplémentaire pour mesurer la température de la bande avant l'ouverture d'entrée (11) du séchoir (1).

10. Séchoir de pâte (1) selon l'une quelconque des revendications précédentes 1 à 9, **caractérisé en ce que** l'au moins un capteur de pression (100) et/ou l'au moins un capteur de température (101) sont disposés en liaison avec 1 à 5 étages de séchage, vus depuis l'ouverture d'entrée (11).

11. Séchoir de pâte (1) selon l'une quelconque des revendications précédentes 1 à 10, **caractérisé en ce que** l'unité de commande (22) comprend une unité de mémoire pour stocker les valeurs de mesure mesurées, les valeurs de vitesse de soufflage calculées et/ou les valeurs de capacité d'évaporation calculées.

12. Séchoir de pâte (1) selon la revendication 11, **caractérisé en ce que** l'unité de commande (22) comprend des moyens de prédiction mathématique pour calculer une prédiction de capacité de séchage.
